# EUROPEAN PATENT SPECIFICATION

(11) **EP 4 499 413 B1**
(45) Date of publication and mention of the grant of the patent: **29.07.2026**
(21) Application number: 22716798.8
(22) Date of filing: 30.03.2022
(51) Int. Cl.: H04N 1/23, B41J 2/175, H04N 1/00, G03G 15/10, G03G 15/00

(54) **PRINTHEAD REMOVALS**
DRUCKKOPFENTFERNUNGEN
RETRAITS DE TÊTE D'IMPRESSION

(43) Date of publication of application: 05.02.2025
(73) Proprietor: Hewlett-Packard Development Company, L.P., Spring TX 77389 (US)
(72) Inventor: VAZQUEZ FERNANDEZ, Dorkaitz Alain, 08174 Sant Cugat del Valles (ES); OROPESA FISICA, Ana, 08174 Sant Cugat del Valles (ES); ESTRAVIS NIETO, Sara, 08174 Sant Cugat del Valles (ES); ROIG HERNANDEZ, Guillem, 08174 Sant Cugat del Valles (ES)
(74) Representative: Plasseraud IP
(86) International application number: PCT/US2022/022612
(87) International publication number: WO 2023/191782

(56) References cited:
- EP-A1- 2 945 051
- WO-A1-2022/010484
- US-B2- 7 604 315

## Description

### BACKGROUND

Printing systems use printing fluid dispensers such as printheads to dispense printing fluid on-demand. In use, printing systems may perform servicing operations to maintain the printheads under operative conditions. In some examples, servicing operations may include ejecting printing fluid and wiping the printheads with a wiper.

Documents EP2945051 and US7604315 disclose printing systems configured to predict the consumption of supply material and to determine when a supply container will reach an empty state based on scheduled print jobs and maintenance actions.

### BRIEF DESCRIPTION OF DRAWINGS

Features of the present disclosure are illustrated by way of example and are not limited in the following figure(s), in which like numerals indicate like elements, in which:
FIG. 1 shows a method for determining a removal of an idle printhead, according to an example of the present disclosure;
FIG. 2 shows a method for determining a removal of an idle printhead based on the printing modes and the print job contents of the upcoming print jobs, according to an example of the present disclosure;
FIG. 3A shows a line chart representing an overall printing fluid waste over a period of time, according to an example of the present disclosure;
FIG. 3B shows a line chart representing an overall printing fluid waste upon an idle printhead is removed and subsequently inserted, according to an example of the present disclosure;
FIG. 4 shows a printer comprising a plurality of printhead slots and a controller, according to an example of the present disclosure;
FIG. 5 shows a computer-readable medium comprising instructions to determine a printhead removal, according to an example of the present disclosure.

### DETAILED DESCRIPTION

The present invention relates to a method according to claim 1, a printer according to claim 6 and a computer-readable storage medium according to claim 9.

For simplicity and illustrative purposes, the present disclosure is described by referring mainly to examples. In the following description, numerous specific details are set forth in order to provide a thorough understanding of the present disclosure. It will be readily apparent, however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

Printing systems use printing fluids dispensers such as printheads to dispense a printing fluid on a print medium. In some examples, the printing fluid dispensers are removably attached to a carriage of the printing system. In some examples, the carriage of a printing system may receive up to 10 printing fluid dispensers. In some examples, a specific type of printing fluid dispenser has to be installed on the carriage to perform a printing operation associated with a print mode. Such a printing fluid dispenser may be adapted to dispense a special type of printing fluid. As a result, printheads may have to be removed from and inserted into the printing system to perform the upcoming printing operations under operative conditions. On the other hand, some of the printheads installed on the carriage of the printing system may not be used in every printing operation of the upcoming printing operations to be carried out by the printing system. As a result, some printheads of the printing system may become idle while other printheads of the printing system are active during the printing operation.

To maintain idle and active printheads under operative conditions, printing systems may have to perform servicing operations. Because of the delay between consecutive drop ejections, printing fluid may cause blockage or clogging of a nozzle (or nozzles) of the printhead. Also, based on the type of printing fluid used by the printing fluid, printing systems may experience printing fluid settling. For example, pigment-based inks may cause printing fluid blockage or clogging in printheads due to pigment-ink vehicle separation (PIVS). PIVS may be a result of water evaporation from ink in the nozzle area and pigment concentration depletion in ink near the nozzle area due to a higher affinity of pigment to water. During periods of storage or non-use, pigment particles may settle in the ink vehicle, which may impede or block ink flow to the ejection chambers and nozzles in the printhead.

To prevent some of the above-mentioned events, printing systems may use capping stations to cap the printheads while the printheads are not in use such that the printheads are not exposed to ambient environments. However, capping stations may not be able to selectively cap and uncap printheads based on their expected usage. Hence, the use of capping stations may be restricted for capping or uncapping all the printheads of the printing system simultaneously. As a result, the use of capping stations does not effectively allow to maintain the printheads under operative conditions over periods of non-use.

To improve the performance of the printheads, printing systems may periodically perform servicing operations. The type and duration of the servicing operations may depend on factors such as the time since the printing fluid ejection, the type of printing fluid to be dispensed, and the upcoming print jobs to be performed by the printing system. Examples of servicing operations comprise wiping the printheads of the printing system using a web wipe and ejecting printing fluid through the nozzles of the printhead to extend the lifespan of the printhead.

However, the execution of servicing operations is associated with other events. For instance, printheads may be damaged as a result of crashes against the medium. Also, the performance of servicing operations may lead to an extra cost because of the print material supplies to be used during the servicing operations. Examples of print material supplies comprise a replaceable waste container to collect printing fluid dispensed during servicing operations, a web wipe to be used for wiping printheads, and printing fluid wasted during a servicing operation involving printing fluid ejection. As a result, the servicing operations carried out by a printing system may be associated with a cost.

Disclosed herein are examples of methods for reducing the costs associated with the servicing operations for keeping the printing system under operative conditions. Also, printers and computer-readable media comprising instructions for reducing the costs associated with the servicing operations are described.

As used herein, "printing fluid" refers generally to any substance that can be applied upon a substrate by a printing system during a printing operation, including but not limited to inks, primers, fusing agents, overcoat materials (such as a varnish), water, and solvents other than water.

Throughout the description, the term "idle printhead" will be used to refer to a printhead that is not to be used in an upcoming printing operation. As explained above, servicing operations are performed to maintain idle printheads under operative conditions over upcoming printing operations and the time frames in between the upcoming printing operations.

As used herein, the term "print mode" refers to a configuration of a printer over a print job (or print jobs). A printer configuration may set at least one of a printer resolution, a media advance, a printing fluid type, a carriage speed, a carriage swath length, and/or the like. Examples of print modes comprise underflood print modes in which a layer of said printing fluid is directly printed on the medium, overflood print modes in which printing fluid is dispensed on a layer of previously printed printing fluid, high-quality print modes in which the frequency of the servicing operations is increased, frontlit modes, backlit modes, best quality mode, draft mode, among others.

According to an example, a printing system may have some of its printheads idle over a period of time. As mentioned above, to maintain these idle printheads under operative conditions, the printing system may have to perform servicing operations. To save the costs associated with the servicing operations, dummy printheads may be installed on the carriage of the printing system. In particular, an idle printhead may be replaced by a dummy printhead such that the idle printhead can be stored. Dummy printheads do not carry out servicing operations, and hence, their use allows users to reduce the cost associated with the servicing operations of the idle printhead.

However, prior to inserting the dummy printhead into the printing system, the printing system may have to perform a servicing operation to condition the printhead that is to be extracted. For example, the printing system may have to perform a servicing operation in the form of a cooling down routine so that the printhead is cooled down to admissible temperature levels. In an example, the cooling down routine may comprise ejecting printing fluid over a period of time. As a result of the cooling down routine, the condition of the printhead changes from a hot condition to a cold condition. Then, once the printhead is in the cold condition, the printhead can be replaced from the printing system with the dummy printhead. Otherwise, if the printhead is extracted in the hot condition, the printhead may experience air ingestion, thereby decreasing its lifespan.

On the other hand, a printing system having installed a dummy printhead on the carriage may not be able to perform specific printing operations in which the previously removed printhead is to be used. Hence, the dummy printhead is to be removed from the printing system and the previously removed printhead (or a different one) is inserted back into the printing system. However, to get the inserted printhead ready for upcoming printing operations of the printing system, a printhead insertion routine is to be performed. In some examples, the printhead insertion routine involves dispensing printing fluid.

As a result, the replacement of an idle printhead with a dummy printhead has associated an amount of printing fluid waste. The amount of printing fluid waste comprises a first amount of printing fluid waste associated with a printhead removal and a second amount of printing fluid waste associated with a printhead insertion. In some examples, the first amount of printing fluid waste associated with the printhead removal may be subjected to the condition of the printhead (hot condition or cold condition).

Throughout the description, the terms "hot conditions" and "cold conditions" will be used to refer to a temperature of the printhead. A printhead is considered to be in hot condition when the printhead is at a temperature exceeding the ambient temperature by a threshold value. The temperature of the printhead may be measured by measuring means or may be modeled using predictive models based on the operations carried out by the printing system. In an example, the threshold value may be 5°C. In some other examples, the threshold value may be 2°C. In some examples, the threshold value may be based on the type of printhead. If a printhead is removed from the printing system while being in a hot condition, such printhead may experience air ingestion that may lead to a dramatic decrease in the lifespan of the printhead.

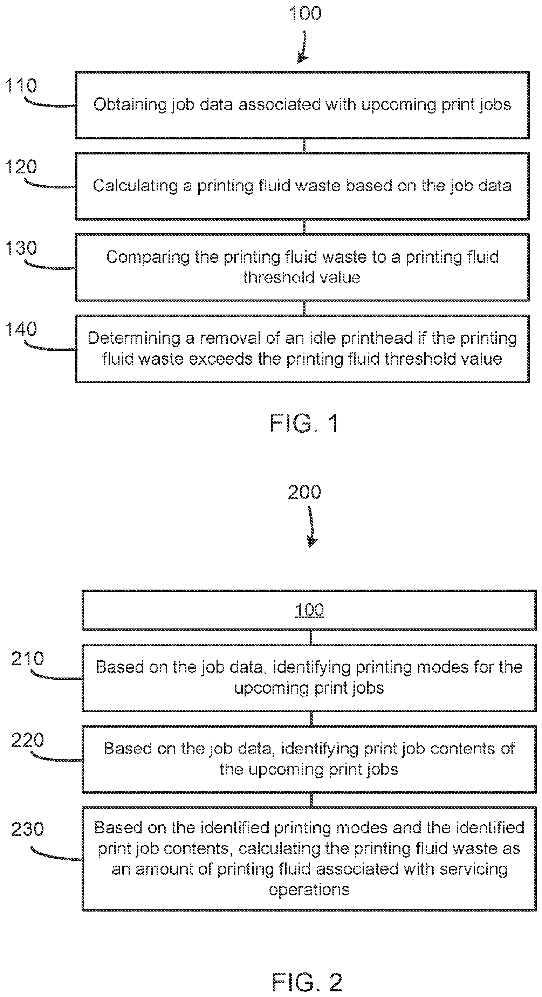

Referring now to FIG. 1, a method 100 for determining a removal of an idle printhead is shown. In an example, method 100 may be performed to determine if an idle printhead of a printing system is to be kept installed on the carriage of the printing system or if the idle printhead is to be replaced with a dummy printhead. At block 110, method 100 comprises obtaining job data associated with upcoming print jobs. The job data associated with the upcoming print jobs may comprise information about the jobs contained in a print job queue of the printing system. At block 120, method 100 comprises calculating a printing fluid waste based on the job data. As previously explained, servicing operations may have to be performed by an idle printhead over the upcoming print jobs. In turn, these servicing operations have associated an amount of printing fluid waste. Then, at block 130, method 100 comprises comparing the printing fluid waste to a printing fluid threshold value associated with idle printhead removal. The printing fluid threshold value may correspond, for instance, to an amount of expected printing fluid waste that may occur if a printhead removal occurs. In an example, comparing the printing fluid waste to the printing fluid threshold value further comprises obtaining data associated with the printing fluid threshold value. In some examples, the data associated with the printing fluid threshold value may comprise printing fluid threshold values for different types of printhead or printing fluid threshold values for different temperature conditions for the printhead. Then, at block 140, method 100 comprises determining a removal of an idle printhead if the printing fluid waste calculated at block 120 exceeds the printing fluid threshold value.

In some examples, the comparison at block 130 between the printing fluid waste calculated at block 120 and the printing fluid threshold value may result in that the printing fluid waste associated with keeping the idle printhead installed on the printing system is lower than the printing fluid threshold value associated with a printhead removal. In other words, the action of removing the printhead and subsequently inserting the printhead into the printing system may lead to a greater waste than the waste associated with keeping the printhead installed.

In some other examples, method 100 may further comprise determining a removal time of the idle printhead based on the upcoming print jobs. As previously explained, servicing operations may occur either when the printing system is performing a printing operation or when the printing system is not performing a printing operation. Hence, to avoid interrupting the printing operation being carried out by the active printheads of a printing system, the time for removing the idle printhead from the printing system may be scheduled during an idle time of the printing system in which all the printheads of the printing system are idle.

In other examples, method 100 further comprises determining a removal time of the idle printhead based on the upcoming print jobs, determining an expected temperature condition of the printhead in between consecutive print jobs of the upcoming print jobs, and modifying the printing fluid threshold value based on the temperature condition. As explained above, the temperature of the printhead with respect to the ambient temperature plays a role with respect to the servicing operations to be carried out for conditioning a printhead for removal. Hence, based on the condition of the printhead, the printing fluid threshold value is modified accordingly. For example, during long periods in which the printing system is not performing printing operations, the printheads may be in the cold condition. Therefore, the removal of the printhead can be performed without carrying out a cooling down routine, and hence, the printing fluid waste associated with the removal is reduced to the amount of printing fluid associated with the insertion of the printhead. In some examples, modifying the printing fluid threshold value may comprise reading data associated with printing fluid threshold values associated with a hot condition and a cold condition and selecting from the data the printing fluid threshold value based on the printhead condition. In some examples, additional sub-ranges may be defined for each of the hot condition and the cold condition.

Referring now to FIG. 2, a method 200 for determining a removal of an idle printhead is shown. At block 100, method 200 comprises the method 100 previously explained in reference to FIG. 1. Then, at block 210, method 200 comprises based on the job data, identifying printing modes for the upcoming print jobs. In some examples, different printing modes may be associated with different amounts of printing fluid waste. For example, the amount of printing fluid waste associated with servicing operations of the idle printhead during a frontlit mode may be different than an amount of printing fluid associated with servicing operations during a backlit mode. In some examples, the print mode may be associated with an expected image quality. Accordingly, the amount of printing fluid waste associated with print jobs having a greater image quality may be greater than the amount of printing fluid waste for print jobs having an expected image quality. In some examples, the print mode may be associated with a number of passes of the printhead across the print zone. In particular, to perform print jobs in print modes with a greater expected image quality, the printhead may have to perform an additional number of passes, and consequently, the amount of printing fluid waste during the servicing operations increases.

At block 220, method 200 comprises based on the job data, identifying print job contents of the upcoming print jobs. In an example, identifying print job contents comprises determining a number of passes or swaths to be performed to print the print job. In some examples, servicing operations may be performed every number of carriage passes across a scan axis of the printing system. Hence, based on the print job data, an expected printing fluid associated with the contents of the upcoming print jobs may be determined.

At block 230, method 200 comprises based on the printing modes identified at block 210 and the print job contents identified at block 220, calculating the printing fluid waste as an amount of printing fluid associated with servicing operations. In other words, based on the contents of the print queue, a printing fluid waste that is to occur during servicing operations to maintain the idle printhead under operative conditions is calculated.

In some examples, method 200 may further comprise determining printing fluid recirculation operations to be performed in between consecutive print jobs of the upcoming print jobs, and block 230 of method 200 comprises calculating the printing fluid waste based on the printing modes identified at block 210, the print job contents identified at block 220, and based on an amount of printing fluid waste associated with the determined printing fluid recirculation operations. In some examples, the amount of printing fluid waste comprises the printing fluid waste of the idle printhead(s). In other examples, the amount of printing fluid waste may comprise the printing fluid waste associated with the servicing operations of the idle printhead(s) and the remaining active printhead that may have to perform a servicing operation as a result of uncapping all the printheads for performing the servicing operation of the idle printhead(s). In other words, the amount of printing fluid waste corresponds to the printing fluid waste associated with all the printheads for maintaining the idle printhead(s) under operative conditions.

As previously explained, the printing fluid waste associated with keeping an idle printhead over a period of time on the printing system depends on multiple factors. Examples of actions that may contribute to the amount of printing fluid waste comprise the servicing operations to be performed before each printing job of the upcoming print jobs in the print job queue, the servicing operations to be performed during each print job of the upcoming print jobs, the servicing operations to be performed after each print job of the upcoming print jobs, and the servicing operations associated with servicing operations during time frames defined between consecutive print jobs.

According to some examples, a servicing operation performed prior to a printing operation may depend on the time that has elapsed since the last printing operation. For instance, a servicing operation for an upcoming printing operation carried out 10 minutes after the last printing operation may have associated a lower printing fluid waste than a servicing operation for an upcoming printing operation carried out 10 hours after the last printing operation. Similarly, other factors such as a printing mode of the print job or the number of passes associated with the print job may affect the amount of printing fluid waste associated with servicing operations for idle printheads carried out while the active printheads of the printing system are carrying out printing operations.

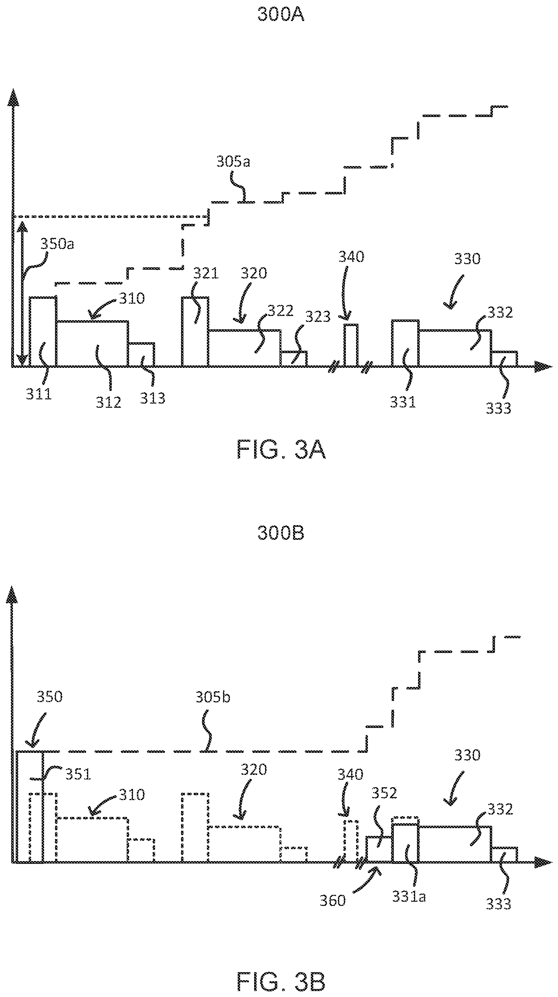

Referring now to FIG. 3A, a line chart 300A representing an overall printing fluid waste 305a over a period of time is shown. The X-axis represents the period of time and the Y-axis represents an amount of printing fluid waste. In the line chart 300A, the amounts of printing fluid waste associated with a first print job 310, a second print job 320, and a third print job 330 are represented. In addition, line chart 300A represents an amount of printing fluid waste associated with a servicing operation 340 in between the second print job 320 and the third print job 330. The printing fluid waste associated with the print jobs 310, 320, and 330 and the servicing operation 340 has been represented as blocks instead of a continuous waste over time to simplify the representation. the stepped dashed line represents the overall printing fluid waste 305a over the period of time. The overall printing fluid waste 305a corresponds to the cumulative printing fluid waste associated with the servicing operations of a printhead of a printing system. In addition, reference line 350a represents an amount of printing fluid waste associated with a printhead removal (i.e., the printing fluid threshold value of block 130 of FIGs. 1 and 2).

In FIG. 3A, the first print job 310 is associated with a first printing fluid waste 311, a second printing fluid waste 312, and a third printing fluid waste 313. The first printing fluid waste 311 corresponds to the amount of printing fluid waste during a servicing operation carried out prior to the printing operation of the printing system. On the other hand, the third printing fluid waste 313 corresponds to the amount of printing fluid waste associated with the servicing operations after the printing operation of the printing system. Finally, the second printing fluid waste 312 corresponds to the printing fluid waste during the printing operation of the printing system. Over the period of time associated with the first print job 310 the overall printing fluid waste 305 is below the reference line 350a. Therefore, in case of a replacement of the idle printhead, the printing fluid waste associated with the printhead removal is greater than the printing fluid waste of the servicing operations carried out by the idle printhead (i.e., the sum of the first printing fluid waste 311, 312, and 313).

The second print job 320 represented in line chart 300A comprises a first printing fluid waste 321 prior to the printing operation, a second printing fluid waste 322 during the printing operation, and a third printing fluid waste 323 after the printing operation. The amounts of the printing fluid waste 321, 322, and 323 are different with respect to the amounts of printing fluid waste 311, 312, and 313 because of the differences in the time since the printing operation, the contents of the print job, and the printing mode for the print job. During the second print job 320, the overall printing fluid waste 305a exceeds the reference line 350a. Therefore, a printhead removal over the first print job 310 and the second print job 320 may have reduced the printing fluid waste. However, since the overall printing fluid waste 305 exceeds the reference line 350 while the printing operation is taking place, a removal of the printhead has a negative in the throughput of the printing system. In some examples, when determining the expected time for a removal of the idle printhead, the expected time may be adjusted so that is within a time frame when the printing system is idle (i.e., a time frame in which all the printheads of the printing system are idle).

After the second print job 320, the next print job in the print job queue is the third print job 330. However, since there is a large amount of time in between the second print job 320 and the third print job 330, the printing system has to carry out the servicing operation 340 for maintaining the idle printhead under operative conditions. Then, the fourth print job 330 has associated a first printing fluid waste 331, a second printing fluid waste 332, and a third printing fluid waste 333. As previously explained, the printhead is active during the third print job 330. However, for illustrative purposes, FIG. 3A does not the printing fluid that has been dispensed on the medium for printing purposes but just the printing fluid waste associated with servicing operations.

Referring now to FIG. 3B, a line chart 300B representing an overall printing fluid waste 305b is shown. The overall printing fluid waste 305b represents a cumulative printing fluid waste over a number of servicing operations. In the line chart 300B, a printing fluid waste associated with a printhead removal 350 is represented. As previously explained, printhead removals may have associated a printing fluid waste for the removal and a printing fluid waste for a subsequent printhead insertion 360. In FIG. 3B, the printing fluid waste for the removal corresponds to a removal printing fluid waste 351 and the printing fluid waste for the subsequent printhead insertion 360 corresponds to an insertion printing fluid waste 352. Referring back to FIG. 3A, the sum of the removal printing fluid waste 351 and the insertion printing fluid waste 352 results in the amount represented by the reference line 350a in the line chart 300A.

In the line chart 300B, the printhead of the printing system is not actively used for printing during the first print job 310 and the second print job 320. However, for the third print job 330, the printhead is actively used for printing. Hence, the printhead has to be installed on the printing system when carrying out the third printing job 330. However, for the first print job 310 and the second print job 320, the printhead may be removed from the printing system. Thus, a removal and a subsequent insertion of the printhead may be scheduled within a period of time defined up to the third print job 330. In particular, in FIG. 3B, the first print job 310, the second print job 320, and the servicing operation 340 are represented in dashed lines. The printhead removal 350 results in a saving of the printing fluid waste associated with the first print job 310, the second print job 320, and the servicing operation 340.

In FIG. 3B, the printhead has to be inserted back into the printing system prior to the third print job 330to carry out the third print job 330 under operative conditions. Once the subsequent printhead insertion 360 has been made, the printing system can start the third print job 330. To reduce the interruptions of the printing system, the subsequent printhead insertion 360 is to be scheduled in an idle time of the printing system to avoid delays.

The third print job 330 of FIG. 3B comprises a first printing fluid waste 331a prior to the printing operation, a second printing fluid waste 332 during the printing operation, and a third printing fluid waste 333 after the printing operation. The second printing fluid waste 332 and the third printing fluid waste 333 remain unchanged compared to the values represented in FIG. 3A, but the first printing fluid waste 331a is lower than the first printing fluid waste 331 represented in FIG. 3A. The reason for this difference is because as previously explained, the servicing operations before the printing operations are dependent on the time since the last printing fluid ejection. Hence, since the subsequent printhead insertion 360 occurred earlier than the servicing operation 340 of FIG. 3A, the first printing fluid waste 331a used during the servicing operation prior to the printing operation of the third print job 330 is reduced.

In some examples, the amount of printing fluid waste may be further reduced by scheduling the subsequent printhead insertion 360 close in time to the upcoming print job. In this way, the amount of printing fluid associated with the servicing operations prior to the printing operation is reduced.

According to some examples, a subsequent use time for the printhead may be determined based on the job data. As previously explained, the print jobs 310, 320, and 330 (and the printing fluid waste associated) may be defined by the job data. Hence, if the print job 330 has to use a printhead that has been an idle printhead during print jobs 310 and 320, such a printhead insertion time for the printhead has to be before the subsequent use time. In some examples, a difference between the subsequent use time and the printhead insertion time has to be greater than a reference time value. In this way, delays in the printing system are avoided.

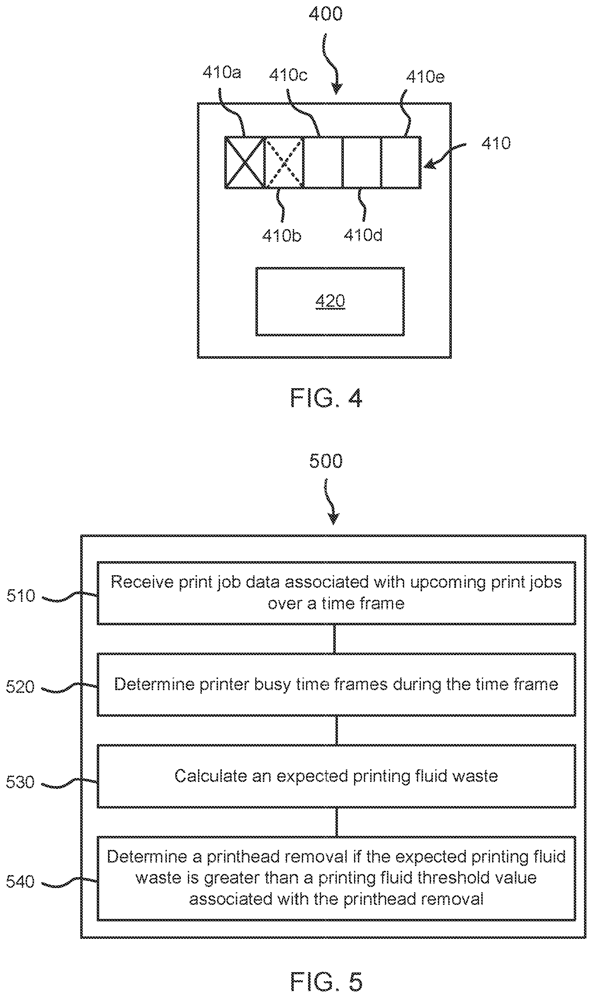

Referring now to FIG. 4, a printer 400 comprising a plurality of printhead slots 410 and a controller 420 is shown. The printer 400 further comprises a plurality of printheads 410a, 410b, 410c, 410d, and 410e removably inserted into the plurality of printhead slots 410. As previously explained, every printhead may not be used for every printing operation. The controller 420 of the printer 400 is to determine printhead removals and printhead insertions for the plurality of printheads 410.

In the printer 400, the controller 420 is to receive print job data associated with the use of the plurality of printheads in upcoming print jobs. Then, for each printhead, the controller 420 is to calculate a printing fluid waste based on the use of the plurality of printheads in the upcoming print jobs. In an example, the controller may calculate the overall printing fluid waste 305 and 305b previously described in FIGs. 3A and 3B for each of the printheads installed on the printer 400. Then, once the printing fluid waste is calculated for each printhead, the controller 420 is to determine a removal of a printhead from a corresponding printhead slot of the plurality of printhead slots 410 if the printing fluid waste associated with the printhead is greater than a printing fluid threshold value associated with the removal of the printhead. Then, the controller 420 is to determine a printhead insertion for the removed printhead in which the removed printhead is to be inserted into the corresponding slot.

In FIG. 4, the printhead 410a and the printhead 410b are idle printheads that are not to be used in the upcoming printing operations. These printheads 410a and 410b are represented with a solid line cross and a dashed line cross, respectively. The solid line cross indicates that the controller 420 has determined that the printhead 410a may be removed from the printer 400 to save printing fluid waste. On the other hand, the controller 420 has determined that even though the printhead 410b is idle over the upcoming print jobs, by keeping the printhead 410b installed on the printer 400 the printing fluid waste is reduced.

In some examples, the printer 400 may further comprise a user interface to indicate data associated with upcoming printhead removals and upcoming printhead insertions. In some examples, after removing the printhead from the printer 400, a dummy printhead is installed. As previously explained, the printing fluid waste associated with dummy printheads is substantially null. However, the removal of the idle printhead from the printer 400 and the subsequent insertion of the printhead into the printer 400 results in a printing fluid waste.

In some other examples, calculate, for each printhead, the printing fluid waste based on the use of the plurality of printheads in upcoming print jobs comprises at least one of determine an amount of printing fluid waste associated with servicing operations before each print job of the upcoming print jobs, determine an amount of printing fluid waste associated with servicing operations during each print job of the upcoming print jobs, determine an amount of printing fluid waste associated with servicing operations after each print job of the upcoming print jobs, and determine an amount of printing fluid waste associated with servicing operations during time frames defined between consecutive print jobs.

In other examples, to determine the printhead removal comprises to schedule the printhead removal at a removal time in which the printhead is expected to be in a cold condition. In the cold condition, the printing fluid waste associated with the removal of the printhead is lower.

In further examples, the controller 420 is further to determine the removal of the printhead such that a number of printhead removals is below a maximum number of removals and an overall printing fluid wasted associated with the printhead is reduced. In this fashion, users can set a maximum number of printhead removals that they want to perform while increasing the saving of printing fluid waste.

According to some examples, a computer-readable storage medium may comprise instructions that, when executed by a processor, cause a processor to determine a printhead removal. Examples of computer-readable media include, for example, electronic, magnetic, optical, electromagnetic, or semiconductor media. More specific examples of suitable processor-readable media include a hard drive, a random access memory (RAM), a read-only memory (ROM), memory cards and sticks, and other portable storage devices.

Referring now to FIG. 5, a computer-readable storage medium 500 comprising instructions to cause a processor to execute blocks 510 to 540 is shown. The instructions, when executed by the processor, cause the processor to determine a printhead removal based on the printing fluid waste associated with said printhead.

At block 510, the instructions cause the processor to receive print job data associated with upcoming print jobs over a time frame. The time frame may correspond, for instance, with the X-axis of FIGs. 3A and 3B. In the line charts 300A and 300B said time frame comprises the first print job 310, the second print job 320, and the third print job 330.

Then, at block 520, the instructions cause the processor to determine printer busy time frames during the time frame. Printer busy time frames may correspond to time frames in which at least one printhead of the printer is performing a printing operation. For instance, in reference to FIGs. 3A, printer busy time frames are the times associated with the second printing fluid waste 312, 322, and 332.

Then, at block 530, the instructions cause the processor to calculate, based on the print job data, an expected printing fluid waste as a function of a printing fluid waste of the printhead during the printer busy time frames and a printing fluid waste of the printhead between the printer busy time frames. Referring back to the line chart 300A, the printing fluid waste of the printhead during the printer busy time frames corresponds to the second printing fluid waste 312, 322, and 332 and the printing fluid waste of the printhead between the printer busy time frames corresponds to the first printing fluid waste 311, 321, and 331, the third printing fluid waste 313, 323, and 333, and the amount of printing fluid waste associated with the servicing operation 340.

At block 540, the instructions cause the processor to determine a printhead removal if the expected printing fluid waste is greater than a printing fluid threshold value associated with printhead removal (e.g., idle printhead removal). For example, in the line chart 300A of FIG. 3A, the printing fluid threshold value corresponds to the reference line 350a.

In some examples, the computer-readable medium 500 may comprise further instructions to cause the processor to determine a subsequent use time when the printhead is to be used in a printing operation based on the print job data and determine a printhead insertion time in between printer busy time frames such that a difference between the subsequent use time and the printhead insertion time is greater than a reference time value. In an example, the reference time value may be 10 minutes. In other examples, 30 minutes. In some examples, a user may select a reference time value from multiple available reference time values.

In other examples, the computer-readable medium 500 may comprise further instructions to cause the processor to determine servicing operations between consecutive printer busy time frames, determine printing mode associated with each printer busy time frame, and determine servicing operations of the printhead each printer busy time frame. As a result, calculate the expected printing fluid waste at block 540 comprises using a function comprising the determined printing mode, the determined servicing operations, and the determined servicing operations between consecutive printer busy time frames.

In some other examples, the computer-readable medium 500 may comprise further instructions to cause the processor to determine a surpass time when the expected printing fluid waste is to exceed the threshold printing fluid waste, reduce the surpass time so that is between subsequent printer busy time frames if the surpass time is to occur during printer busy time frame, and determine a removal time based on the corrected surpass time. In this fashion, the removal does not mitigate the throughput of the printer.

In further examples, the computer-readable medium 500 may comprise further instructions to cause the processor to determine a surpass time when the expected printing fluid waste is to exceed the threshold printing fluid waste, reduce the surpass time so that is between subsequent printer busy time frames if the surpass time is to occur during printer busy time frame, determine a removal time based on the corrected surpass time, based on the print job data, determine a subsequent use time in which the printhead is to be used in a printing operation, determine an insertion time before the subsequent use time, and reduce at least one of the insertion time and the removal time such that a difference between the insertion time and the removal time is greater than a minimum time between subsequent actions. In this fashion, the time between a removal of a printhead and a subsequent insertion of the printhead is maintained over a minimum time value.

What has been described and illustrated herein are examples of the disclosure along with some variations. The terms, descriptions, and figures used herein are set forth by way of illustration only and are not meant as limitations. Many variations are possible within the scope of the disclosure, which is intended to be defined by the following claims in which all terms are meant in their broadest reasonable sense unless otherwise indicated.

## Claims

1. A method for determining a removal of an idle printhead, the method comprising:
obtaining job data associated with upcoming print jobs;
calculating a printing fluid waste based on the job data;
comparing the printing fluid waste to a printing fluid threshold value associated with idle printhead removal;
determining a removal of an idle printhead if the printing fluid waste exceeds the printing fluid threshold value, whereby the idle printhead is not to be used in an upcoming printing operation; and
determining a printhead insertion for the removed printhead in which the removed printhead is to be inserted into a corresponding slot.

2. The method of Claim 1, the method further comprising: determining a removal time for the removal of the idle printhead based on the upcoming print jobs.

3. The method of Claim 2, the method further comprising:
determining an expected temperature condition of the printhead in between consecutive print jobs of the upcoming print jobs; and
modifying the printing fluid threshold value based on the expected temperature condition.

4. The method of Claim 1, wherein calculating a printing fluid waste based on the job data comprises:
based on the job data, identifying printing modes for the upcoming print jobs;
based on the job data, identifying print job contents of the upcoming print jobs; and
based on the identified printing modes and the identified print job contents, calculating the printing fluid waste as an amount of printing fluid associated with servicing operations.

5. The method of Claim 4, further comprising:
determining printing fluid recirculation operations to be performed in between consecutive print jobs of the upcoming print jobs,
wherein calculating the printing fluid waste is further based on an amount of printing fluid waste associated with the determined printing fluid recirculation operations.

6. A printer comprising:
a plurality of printheads configured to be removably inserted into a plurality of printhead slots; and
a controller configured to:
receive print job data associated with use of the plurality of printheads in the upcoming print jobs,
for each printhead, calculate a printing fluid waste based on the use of the plurality of printheads in upcoming print jobs,
determine a removal of a printhead from a corresponding slot of the plurality of printhead slots if the printing fluid waste associated with the printhead is greater than a printing fluid threshold value associated with the removal of the printhead and if the printhead is not to be used in an upcoming printing operation; and
determine a printhead insertion for the removed printhead in which the removed printhead is to be inserted into the corresponding slot.

7. The printer of Claim 6, the printer further comprising a user interface to indicate data associated with upcoming printhead removals and upcoming printhead insertions.

8. The printer of Claim 6, wherein calculate, for each printhead, the printing fluid waste based on the use of the plurality of printheads in upcoming print jobs comprises at least one of:
determine an amount of printing fluid waste associated with servicing operations before each print job of the upcoming print jobs,
determine an amount of printing fluid waste associated with servicing operations during each print job of the upcoming print jobs,
determine an amount of printing fluid waste associated with servicing operations after each print job of the upcoming print jobs, and
determine an amount of printing fluid waste associated with servicing operations during time frames defined between consecutive print jobs.

9. A computer-readable storage medium comprising instructions that, when executed by a processor, cause the processor to:
receive print job data associated with upcoming print jobs over a time frame;
determine printer busy time frames during the time frame;
based on the print job data, calculate an expected printing fluid waste as a function of a printing fluid waste of the printhead during the printer busy time frames and a printing fluid waste of the printhead between the printer busy time frames;
determine a printhead removal if the expected printing fluid waste is greater than a printing fluid threshold value associated with the printhead removal and if the printhead is not to be used in an upcoming printing operation; and
determine a printhead insertion for the removed printhead in which the removed printhead is to be inserted into a corresponding slot.

10. The computer-readable medium of Claim 9, further comprising instructions to cause the processor to:
based on the print job data, determine a subsequent use time when the printhead is to be used in a printing operation; and
determine a printhead insertion time in between printer busy time frames such that a difference between the subsequent use time and the printhead insertion time is greater than a reference time value.

11. The computer-readable medium of Claim 9, further comprising instructions to cause the processor to:
determine servicing operations between consecutive printer busy time frames;
determine printing mode associated with each printer busy time frame; and determine servicing operations of the printhead each printer busy time frame,
wherein calculate the expected printing fluid waste comprises using a function comprising the determined printing mode, the determined servicing operations, and the determined servicing operations between consecutive printer busy time frames.

12. The computer-readable medium of Claim 9, further comprising instructions to cause the processor to:
determine a surpass time when the expected printing fluid waste is to exceed the threshold printing fluid waste;
if the surpass time is to occur during printer busy time frame, reduce the surpass time so that is between subsequent printer busy time frames; and
determine a removal time based on the corrected surpass time.

13. The computer-readable medium of Claim 12, further comprising instructions to cause the processor to:
based on the print job data, determine a subsequent use time in which the printhead is to be used in a printing operation;
determine an insertion time before the subsequent use time; and
reduce at least one of the insertion time and the removal time such that a difference between the insertion time and the removal time is greater than a minimum time between subsequent actions.

## Patentansprüche

1. Verfahren zum Bestimmen einer Entfernung eines inaktiven Druckkopfs, wobei das Verfahren umfasst:
Erhalten von Auftragsdaten, die anstehenden Druckaufträgen zugeordnet sind;
Berechnen eines Druckfluidabfalls auf der Basis der Auftragsdaten;
Vergleichen des Druckfluidabfalls mit einem Druckfluidschwellenwert, der der Entfernung eines inaktiven Druckkopfs zugeordnet ist;
Bestimmen einer Entfernung eines inaktiven Druckkopfs, falls der Druckfluidabfall den Druckfluidschwellenwert überschreitet, wobei der inaktive Druckkopf in einem anstehenden Druckvorgang nicht zu verwenden ist; und
Bestimmen eines Druckkopfeinsteckens für den entfernten Druckkopf, bei dem der entfernte Druckkopf in einen entsprechenden Schlitz einzustecken ist.

2. Verfahren nach Anspruch 1, wobei das Verfahren ferner umfasst:
Bestimmen einer Entfernungszeit für die Entfernung des inaktiven Druckkopfs auf der Basis der anstehenden Druckaufträgen.

3. Verfahren nach Anspruch 2, wobei das Verfahren ferner umfasst:
Bestimmen eines erwarteten Temperaturzustands des Druckkopfs zwischen aufeinanderfolgenden Druckaufträgen der anstehenden Druckaufträge; und
Modifizieren des Druckfluidschwellenwerts auf der Basis der erwarteten Temperaturbedingung.

4. Verfahren nach Anspruch 1, wobei das Berechnen eines Druckfluidabfalls auf der Basis der Auftragsdaten umfasst:
auf der Basis der Auftragsdaten, Identifizieren von Druckmodi für die anstehenden Druckaufträge;
auf der Basis der Auftragsdaten, Identifizieren von Druckauftragsinhalten der anstehenden Druckaufträge; und
auf der Basis der identifizierten Druckmodi und der identifizierten Druckauftragsinhalte, Berechnen des Druckfluidabfalls als eine Menge von Druckfluid, die Wartungsvorgängen zugeordnet ist.

5. Verfahren nach Anspruch 4, das ferner umfasst:
Bestimmen von Druckfluidrezirkulationsvorgängen, die zwischen aufeinanderfolgenden Druckaufträgen der anstehenden Druckaufträge durchzuführen sind,
wobei das Berechnen des Druckfluidabfalls ferner auf einer Menge von Druckfluidabfall basiert, die den bestimmten Druckfluidrezirkulationsvorgängen zugeordnet ist.

6. Drucker, der umfasst:
eine Vielzahl von Druckköpfen, die dazu konfiguriert sind, entfernbar in eine Vielzahl von Druckkopfschlitzen eingesteckt zu werden; und
eine Steuerung, die konfiguriert ist zum:
Empfangen von Druckauftragsdaten, die der Verwendung der Vielzahl von Druckköpfen in den anstehenden Druckaufträgen zugeordnet sind,
für jeden Druckkopf, Berechnen eines Druckfluidabfalls auf der Basis der Verwendung der Vielzahl von Druckköpfen in anstehenden Druckaufträgen,
Bestimmen einer Entfernung eines Druckkopfs aus einem entsprechenden Schlitz der Vielzahl von Druckkopfschlitzen, falls der Druckfluidabfall, der dem Druckkopf zugeordnet ist, größer als ein Druckfluidschwellenwert ist, der der Entfernung des Druckkopfs zugeordnet ist, und falls der Druckkopf in einem anstehenden Druckvorgang nicht zu verwenden ist; und
Bestimmen eines Druckkopfeinsteckens für den entfernten Druckkopf, bei dem der entfernte Druckkopf in den entsprechenden Schlitz einzustecken ist.

7. Drucker nach Anspruch 6, wobei der Drucker ferner eine Benutzerschnittstelle umfasst, um Daten, die anstehenden Druckkopfentfernungen und anstehenden Druckkopfeinsteckungen zugeordnet sind, anzuzeigen.

8. Drucker nach Anspruch 6, wobei das Berechnen, für jeden Druckkopf, des Druckfluidabfalls auf der Basis der Verwendung der Vielzahl von Druckköpfen in anstehenden Druckaufträgen mindestens eines umfasst von:
Bestimmen einer Menge von Druckfluidabfall, die Wartungsvorgängen vor jedem Druckauftrag der anstehenden Druckaufträge zugeordnet ist,
Bestimmen einer Menge von Druckfluidabfall, die Wartungsvorgängen während jedes Druckauftrags der anstehenden Druckaufträge zugeordnet ist,
Bestimmen einer Menge von Druckfluidabfall, die Wartungsvorgängen nach jedem Druckauftrag der anstehenden Druckaufträge zugeordnet ist, und
Bestimmen einer Menge von Druckfluidabfall, die Wartungsvorgängen während Zeiträumen, die zwischen aufeinanderfolgenden Druckaufträgen definiert sind, zugeordnet ist.

9. Computerlesbares Speichermedium, das Anweisungen umfasst, die, wenn sie durch einen Prozessor ausgeführt werden, den Prozessor veranlassen zum:
Empfangen von Druckauftragsdaten, die anstehenden Druckaufträgen über einen Zeitrahmen zugeordnet sind;
Bestimmen von Druckerbelegungszeitrahmen während des Zeitrahmens;
auf der Basis der Druckauftragsdaten, Berechnen eines erwarteten Druckfluidabfalls in Abhängigkeit eines Druckfluidabfalls des Druckkopfs während der Druckerbelegungszeitrahmen und eines Druckfluidabfalls des Druckkopfs zwischen den Druckerbelegungszeitrahmen;
Bestimmen einer Druckkopfentfernung, falls der erwartete Druckfluidabfall größer als ein Druckfluidschwellenwert ist, der der Druckkopfentfernung zugeordnet ist, und falls der Druckkopf in einem anstehenden Druckvorgang nicht zu verwenden ist; und
Bestimmen eines Druckkopfeinsteckens für den entfernten Druckkopf, bei dem der entfernte Druckkopf in einen entsprechenden Schlitz einzustecken ist.

10. Computerlesbares Medium nach Anspruch 9, das Anweisungen umfasst, die den Prozessor ferner veranlassen zum:
auf der Basis der Druckauftragsdaten, Bestimmen eines nachfolgenden Verwendungszeitpunkts, zu dem der Druckkopf in einem Druckvorgang zu verwenden ist; und
derartiges Bestimmen einer Druckkopfeinsteckzeit zwischen Druckerbelegungszeitrahmen, dass eine Differenz zwischen der nachfolgenden Verwendungszeit und der Druckkopfeinsteckzeit größer als ein Referenzzeitwert ist.

11. Computerlesbares Medium nach Anspruch 9, das Anweisungen umfasst, die den Prozessor ferner veranlassen zum:
Bestimmen von Wartungsvorgängen zwischen aufeinanderfolgenden Druckerbelegungszeitrahmen;
Bestimmen des Druckmodus, der jedem Druckerbelegungszeitrahmen zugeordnet ist; und Bestimmen von Wartungsvorgängen des Druckkopfs in jedem Druckerbelegungszeitrahmen,
wobei das Berechnen des erwarteten Druckfluidabfalls das Verwenden einer Funktion umfasst, die den bestimmen Druckmodus, die bestimmen Wartungsvorgänge und die bestimmen Wartungsvorgänge zwischen aufeinanderfolgenden Druckerbelegungszeitrahmen umfasst.

12. Computerlesbares Medium nach Anspruch 9, das Anweisungen umfasst, die den Prozessor ferner veranlassen zum:
Bestimmen einer Überschreitungszeit, zu der der erwartete Druckfluidabfall die Druckfluidabfallschwelle überschreitet;
falls die Überschreitungszeit während eines Druckerbelegungszeitrahmens einzutreten hat, Verringern der Überschreitungszeit, sodass sie zwischen nachfolgenden Druckerbelegungszeitrahmen liegt; und
Bestimmen einer Entfernungszeit auf der Basis der korrigierten Überschreitungszeit.

13. Computerlesbares Medium nach Anspruch 12, das Anweisungen umfasst, die den Prozessor veranlassen zum:
auf der Basis der Druckauftragsdaten, Bestimmen einer nachfolgenden Verwendungszeit, in der der Druckkopf in einem Druckvorgang zu verwenden ist;
Bestimmen einer Einsteckzeit vor der nachfolgenden Verwendungszeit; und
derartiges Verringern mindestens einer der Einsteckzeit und der Entfernungszeit, dass eine Differenz zwischen der Einsteckzeit und der Entfernungszeitgrößer als eine Mindestzeit zwischen aufeinanderfolgenden Aktionen ist.

## Revendications

1. Procédé permettant de déterminer un retrait d'une tête d'impression inactive, le procédé comprenant :
l'obtention de données de travail associées à des travaux d'impression à venir ;
le calcul d'un volume de déchets de fluide d'impression en fonction des données de travail ;
la comparaison des déchets de fluide d'impression à une valeur seuil de fluide d'impression associée au retrait de la tête d'impression inactive ;
la détermination d'un retrait d'une tête d'impression inactive si les déchets de fluide d'impression dépassent la valeur seuil de fluide d'impression, la tête d'impression inactive ne devant pas être utilisée dans une opération d'impression à venir ; et
la détermination d'une insertion de tête d'impression pour la tête d'impression retirée dans laquelle la tête d'impression retirée doit être insérée dans une fente correspondante.

2. Procédé selon la revendication 1, le procédé comprenant en outre :
la détermination d'un temps de retrait pour le retrait de la tête d'impression inactive en fonction des travaux d'impression à venir.

3. Procédé selon la revendication 2, le procédé comprenant en outre :
la détermination d'une condition de température attendue de la tête d'impression entre des travaux d'impression consécutifs des travaux d'impression à venir ; et
la modification de la valeur seuil de fluide d'impression en fonction de la condition de température attendue.

4. Procédé selon la revendication 1, dans lequel le calcul d'un volume de déchets de fluide d'impression en fonction des données de travail comprend :
en fonction des données de travail, l'identification de modes d'impression pour les travaux d'impression à venir ;
en fonction des données de travail, l'identification de contenus de travaux d'impression des travaux d'impression à venir ; et
en fonction des modes d'impression identifiés et des contenus de travaux d'impression identifié, le calcul des déchets de fluide d'impression en tant que quantité de fluide d'impression associée à des opérations d'entretien.

5. Procédé selon la revendication 4, comprenant en outre :
la détermination des opérations de recirculation de fluide d'impression à effectuer entre des travaux d'impression consécutifs des travaux d'impression à venir,
dans lequel le calcul des déchets de fluide d'impression est en outre basé sur une quantité de déchets de fluide d'impression associés aux opérations de recirculation de fluide d'impression déterminées.

6. Imprimante comprenant :
une pluralité de têtes d'impression conçues pour être insérées de manière amovible dans une pluralité de fentes de tête d'impression ; et
un dispositif de commande configuré pour :
recevoir des données de travail d'impression associées à l'utilisation de la pluralité de têtes d'impression dans les travaux d'impression à venir,
pour chaque tête d'impression, calculer un volume de déchets de fluide d'impression en fonction de l'utilisation de la pluralité de têtes d'impression dans les travaux d'impression à venir,
déterminer un retrait d'un tête d'impression d'une fente correspondante de la pluralité de fentes de tête d'impression si les déchets de fluide d'impression associés à la tête d'impression sont supérieurs à une valeur seuil de fluide d'impression associée à l'élimination de la tête d'impression et si la tête d'impression ne doit pas être utilisée dans une opération d'impression à venir ; et
déterminer une insertion de tête d'impression pour la tête d'impression retirée dans laquelle la tête d'impression retirée doit être insérée dans la fente correspondante.

7. Imprimante selon la revendication 6, l'imprimante comprenant en outre une interface utilisateur pour indiquer des données associées aux retraits à venir de la tête d'impression et aux insertions à venir de la tête d'impression.

8. Imprimante selon la revendication 6, dans laquelle le calcul, pour chaque tête d'impression, des déchets de fluide d'impression en fonction de l'utilisation de la pluralité de têtes d'impression dans les travaux d'impression à venir comprend au moins l'une parmi :
la détermination d'une quantité de déchets de fluide d'impression associés aux opérations d'entretien avant chaque travail d'impression des travaux d'impression à venir,
la détermination d'une quantité de déchets de fluide d'impression associés à des opérations d'entretien pendant chaque travail d'impression des travaux d'impression à venir,
la détermination d'une quantité de déchets de fluide d'impression associés aux opérations d'entretien après chaque travail d'impression des travaux d'impression à venir, et
la détermination d'une quantité de déchets de fluide d'impression associés aux opérations d'entretien pendant les périodes données définies entre les travaux d'impression consécutifs.

9. Support de stockage lisible par machine comprenant des instructions qui, lorsqu'elles sont exécutées par un processeur, amènent le processeur à :
recevoir des données de travaux d'impression associées aux travaux d'impression à venir sur une période donnée ;
déterminer les périodes données d'occupation de l'imprimante pendant la période donnée ;
en fonction des données de travail d'impression, calculer un volume de déchets de fluide d'impression attendu en fonction d'un volume de déchets de fluide d'impression de la tête d'impression pendant les périodes données d'occupation de l'imprimante et d'un volume de déchets de fluide d'impression de la tête d'impression entre les périodes données d'occupation de l'imprimante ;
déterminer un retrait de tête d'impression si le volume de déchets de fluide d'impression attendu est supérieur à une valeur seuil de fluide d'impression associée au retrait de tête d'impression et si la tête d'impression ne doit pas être utilisée dans une opération d'impression à venir ; et
déterminer une insertion de tête d'impression pour la tête d'impression retirée dans laquelle la tête d'impression retirée doit être insérée dans une fente correspondante.

10. Support lisible par ordinateur selon la revendication 9, comprenant en outre des instructions amenant le processeur à :
en fonction des données de travail d'impression, déterminer un temps d'utilisation ultérieur lorsque la tête d'impression doit être utilisée dans une opération d'impression ; et
déterminer un temps d'insertion de la tête d'impression entre les périodes données d'occupation de l'imprimante, de telle sorte qu'une différence entre le temps d'utilisation ultérieur et le temps d'insertion de la tête d'impression est supérieure à une valeur de temps de référence.

11. Support lisible par ordinateur selon la revendication 9, comprenant en outre des instructions amenant le processeur à :
déterminer les opérations d'entretien entre des périodes données d'occupation de l'imprimante consécutives ;
déterminer le mode d'impression associé à chaque période donnée d'occupation de l'imprimante ; et déterminer les opérations d'entretien de la tête d'impression à chaque période donnée d'occupation de l'imprimante,
dans lequel le calcul du volume de déchets de fluide d'impression attendu comprend l'utilisation d'une fonction comprenant le mode d'impression déterminé, les opérations d'entretien déterminées et les opérations d'entretien déterminées entre des périodes données d'occupation de l'imprimante consécutives.

12. Support lisible par ordinateur selon la revendication 9, comprenant en outre des instructions amenant le processeur à :
déterminer un temps de dépassement lorsque le volume de déchets de fluide d'impression attendu doit dépasser le seuil du volume de déchets de fluide d'impression ;
si le temps de dépassement doit se produire pendant une période donnée d'occupation de l'imprimante, réduire le temps de dépassement de sorte qu'il soit entre des périodes données d'occupation de l'imprimante ultérieures ; et
déterminer un temps de retrait en fonction du temps de dépassement corrigé.

13. Support de stockage lisible par ordinateur selon la revendication 12, comprenant en outre des instructions amenant le processeur à :
en fonction des données de travail d'impression, déterminer un temps d'utilisation ultérieur durant lequel la tête d'impression doit être utilisée dans une opération d'impression ;
déterminer un temps d'insertion avant le temps d'utilisation ultérieur ; et
réduire au moins l'un parmi le temps d'insertion et le temps de retrait de telle sorte qu'une différence entre le temps d'insertion et le temps de retrait est supérieure à un temps minimum entre des actions ultérieures.
